# EUROPEAN PATENT APPLICATION

(11) **EP 1 568 716 A1**
(43) Date of publication of application: **31.08.2005**
(21) Application number: 04075578.7
(22) Date of filing: 24.02.2004
(51) Int. Cl.: C08F 4/02, C08F 4/622, C08F 4/70

(54) **Catalyst system comprising magnesium halide**

(71) Applicant: Stichting Dutch Polymer Institute, 5612 AB Eindhoven (NL)
(72) Inventor: Severn, John Richard, 5612 AB Eindhoven (NL); Chadwick, John Clement, 5612 AB Eindhoven (NL)
(74) Representative: Colucci, Giuseppe

(57) **Abstract**

A supported catalyst system comprising the product obtainable by contacting an adduct of formula (I)

MgT₂·yAlQⱼ(OU)₃₋ⱼ (I)

wherein T is chlorine, bromine, or iodine; U is a linear or branched C₁-C₁₀ alkyl radical, y ranges from 6.00 to 0.05; j ranges from 3 to 0.1; Q substituents, are hydrocarbon radicals containing from 1 to 20 carbon atoms; with at least one compound selected from the compounds of formula (II), (III) and (IV) 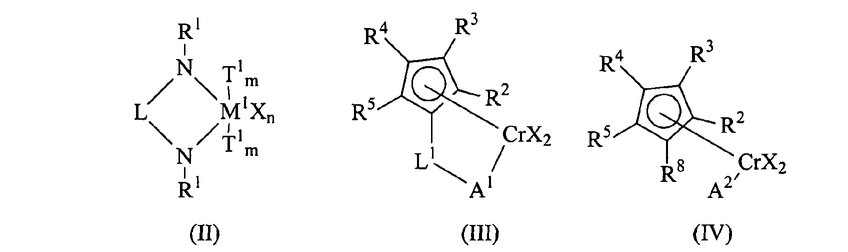 wherein M¹ is a transition metal atom selected from Groups 3-11 of Periodical Table; R¹, R², R³, R⁴, R⁵ and R⁸ are hydrogen halogen or hydrocarbon groups; L and L¹ are divalent hydrocarbon groups; T¹ is a Lewis base; A1 and A2 are oxigen sulfur or nitrogen containing groups and X is hydrogen halogen or hydrocarbon group.

## Description

The present invention relates to a catalyst system comprising a single site catalyst component containing a transition metal, supported on an adduct containing magnesium halide and an organoaluminum compound.

Single site catalyst components are well known in the art and are usually used in conjunction with alumoxanes or boron compounds as cocatalysts. The catalyst systems so obtained can be used supported on an inert support in order to control the morphology of the obtained polymer and to avoid fouling in the reactor, especially in a gas-phase or slurry polymerization processes.

The drawback of the catalyst systems so obtained is that since alumoxanes need to be used in large excess with respect to single site catalyst components the resulting catalyst is very expensive. Therefore it should be desirable to reduce or eliminate the use of alumoxanes.

When boron compounds are used as cocatalyst, a large excess is not required. However they have the drawback of being more expensive than alumoxanes and dangerous to handle.

Magnesium chloride is a well-known support for classic Ziegler Natta catalyst systems based on TiCl₄ or TiCl₃. The use of this compound as a carrier for single-site catalysts could be very advantageous, in view of its chemical and structural simplicity, and the possibility to finely control the porosity of this support and, therefore, to easily tune the porosity of the final catalyst system.

Adducts containing magnesium chloride and an organoaluminum compound have already been proposed as supports for metallocene-based catalyst components in which the central atom is zirconium, titanium or hafnium. For example, in Macromol. Chem. Phys. 195, 1369-1379 (1984), MgCl₂ in combination with a zirconocene catalyst and trialkylaluminum is used. More recently, In Macromolecules 1993, 26, 4712 mixtures of MgR₂ and AlR₂Cl (generating MgCl₂ and AlR₃) as cocatalyst components for olefin polymerization using various metallocenes have been used. In various papers, namely, Korean J. Chem. Eng. 16(5) 562-570, Journal of Applied Polymer science Vol 70, 1707-1715, Korean J. Chem. Eng. 19(4) 557-563 and J. Molec. Catal A 191, 2003, 155-165, Lee and co-workers proposed a metallocene-based catalyst system in which alcohol and anhydrous MgCl₂ are reacted to form an adduct MgCl₂-alcohol. The adduct, further reacted with trialkylaluminum, is used for supporting zirconocene compounds. The obtained catalyst system can be used without a further addition of alumoxanes.

However, there is still the need to find alternative, easily obtainable supports for other kinds of single site catalyst system allowing elimination of the use of alumoxanes or boron compounds.

An object of the present invention is therefore a supported catalyst system comprising the product obtainable by contacting:
a) an adduct of formula (I)

   MgT₂^{·}yAlQⱼ(OU)₃₋ⱼ (I)

   wherein
   Mg is magnesium; Al is aluminum;
   T is chlorine, bromine, or iodine, preferably chlorine;
   U is a linear or branched C₁-C₁₀ alkyl radical, preferably U is a linear C₁-C₁₀ alkyl radical; more preferably U is a methyl or an ethyl radical;
   y ranges from 6.00 to 0.05; preferably Y ranges from 2 to 0.1, more preferably from 1 to 0.1;
   j ranges from 3 to 0.1, preferably from 3 to 0.5; more preferably from 3 to 1 being also a non integer number;
   Q substituents, same or different, are hydrocarbon radicals containing from 1 to 20 carbon atoms optionally containing silicon or germanium atoms; preferably Q is a linear or branched, cyclic or acyclic, C₁-C₂₀-alkyl, C₂-C₂₀ alkenyl, C₂-C₂₀ alkynyl,
   C₆-C₂₀-aryl, C₇-C₂₀-alkylaryl or C₇-C₂₀-arylalkyl radicals optionally containing silicon or germanium atoms; more preferably Q is a linear or branched C₁-C₂₀-alkyl radical; even more preferably Q is an ethyl, a n-propyl, an iso-propyl, a n-butyl, an iso-butyl, a tert-butyl, a hexyl or an octyl radical;
b) with at least one compound selected from the compounds of formula (II), (III) and (IV) 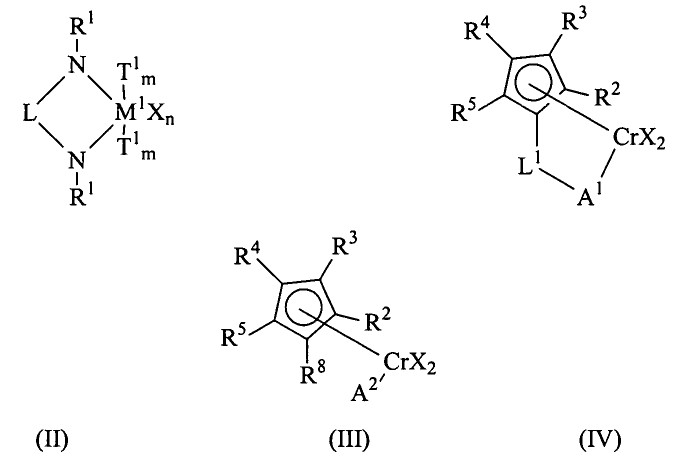
wherein:
in the compound of formula (II)
M¹ is a transition metal atom selected from Groups 3-11 of Periodical Table (Group 3 including lanthanoids); preferably M¹ is a transition metal atom selected from Groups 3-6 and 8-10, more preferably M¹ is a transition metal atom selected from Groups 4, 5, and 6; still more preferably M¹ is a metal of Group 4 or 5: specifically including scandium, titanium, zirconium, hafnium, vanadium, niobium, tantalum, cobalt, rhodium, yttrium, chromium, molybdenum, tungsten, manganese, rhenium, iron, ruthenium, nickel, and palladium; preferably scandium, titanium, zirconium, hafnium, vanadium, niobium, tantalum, iron, cobalt, rhodium, nickel, and palladium; more preferably titanium, zirconium, hafnium, vanadium, nickel, niobium, tantalum, chromium, and molybdenum; still more preferably titanium, vanadium and nickel;
the substituents X, equal to or different from each other, are monoanionic sigma ligands selected from the group consisting of hydrogen, halogen, R, OR, OCOR, SR, NR₂ and PR₂, wherein R is a hydrocarbon radical containing from 1 to 20 carbon atoms optionally containing one or more Si or Ge atoms; preferably X is an halogen atom or a R group; more preferably X is chlorine or a C₁-C₁₀ alkyl radical, such as a methyl or an ethyl radical;
n ranges from 0 to 3; preferably n is 2;
the bonds connecting the two nitrogen atoms with the bridge L can be single bonds or double bonds.
L is a divalent bridge connecting the two nitrogen atoms; preferably L is a divalent C₁-C₄₀ hydrocarbon group optionally containing one or more heteroatoms belonging to groups 13-17 of the Periodic Table of the Elements;
R¹, equal to or different from each other, are C₁-C₄₀ hydrocarbon radicals optionally containing one or more heteroatoms belonging to groups 13-17 of the Periodic Table of the Elements; preferably R¹ are hydrogen atom, linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing silicon atoms;
m ranges from 0 to 1; when m is 0 the group T¹ does not exist;
T¹ is a Lewis base such as tetrahydrofuran, tertiary amine, pyridine, pyrrole and the like. The group T¹ can also be bonded to the group R¹;
in the compound of formula (III)
Cr is a chromium atom; X has been described above;
R², R³, R⁴ and R⁵, equal to or different from each other, are hydrogen atoms, halogen atoms, or C₁-C₄₀ hydrocarbon radicals optionally containing one or more heteroatoms belonging to groups 13-17 of the Periodic Table of the Elements; or two adjacent R², R³, R⁴ and R⁵ form one or more C₃-C₇ membered ring optionally containing heteroatoms belonging to groups 13-17 of the periodic table; preferably R², R³, R⁴ and R⁵, equal to or different from each other, are hydrogen atoms, halogen atoms or linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals; or two adjacent R², R³, R⁴ and R⁵ can form one or more C₃-C₇ membered ring;
L¹ is a divalent bridging group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms such as SiMe₂, SiPh₂; preferably L¹ is a divalent group (ZR⁶ₘ₁)ₙ₁; Z being C, Si, Ge, N or P, and the R⁶ groups, equal to or different from each other, being hydrogen or hydrocarbon groups containing from 1 to 20 carbon atoms, or two R⁶ can form an aliphatic or aromatic C₄-C₇ ring; preferably R⁶ is hydrogen or a linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radical;
more preferably L¹ is selected from Si(CH₃)₂, SiPh₂, SiPhMe, SiMe(SiMe₃), CH₂, (CH₂)₂, (CH₂)₃ or C(CH₃)₂;
m1 is 1 or 2, and more specifically it is 1 when Z is N or P, and it is 2 when Z is C, Si or Ge;
n1 is an integer ranging from 1 to 4; preferably it is 1 or 2;
A¹ is a moiety of formula (V) 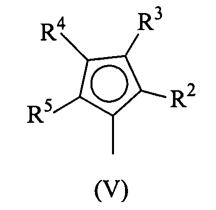 wherein R², R³, R⁴ and R⁵ have been described above; otherwise A¹ is an oxygen atom, a sulphur atom, a NR⁷, NR⁷₂, a OR⁷ or a SR⁷ group, wherein R⁷, is a C₁-C₄₀ hydrocarbon radical, preferably R⁷ is a linear or branched, cyclic or acyclic, C₁-C₂₀-alkyl, C₆-C₂₀-aryl, C₇-C₂₀-alkylaryl or C₇-C₂₀-arylalkyl radical; more preferably R⁷ is a C₁-C₂₀-alkyl radical, such as a methyl or an ethyl radical; preferably A¹ is a NR⁷₂ group;
in the compound of formula (IV)
Cr is chromium; X, R², R³, R⁴ and R⁵ have been described above, and R⁸ has the same meaning given for R², R³, R⁴ and R⁵;
A² is halogen, R⁷, OR⁷, OCOR⁷, SR⁷, NR⁷₂, NR⁷₃, SR⁷₂, OR⁷₂ wherein R⁷ has been described above; preferably A2 is a NR⁷₃ group.

The adduct of formula (I)

MgT₂^{·}yAlQⱼ(OU)₃₋ⱼ (I)

has a surface area (BET) higher than 30 m²/g; more preferably higher than 38 m²/g; even more preferably higher than 200 m²/g; but it can reach values higher than 300 m²/g. It can be obtained with methods commonly known in the art. For example the adduct MgT₂wUOH, wherein w ranges from 0.1 to 6 is contacted with an aluminum compound of formula HₑAlQ¹₃₋ₑ or HₑAl₂Q¹₆₋ₑ, in an inert solvent; where the Q¹ substituents, same or different, are hydrogen atoms, halogen atoms, or hydrocarbon radicals containing from 1 to 20 carbon atoms optionally containing silicon or germanium atoms; with the proviso that at least one Q¹ is different from halogen, and e ranges from 0 to 1, being also a non-integer number; preferably such a hydrocarbon radicals are linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing silicon or germanium atoms; preferably Q¹ is a linear or branched C₁-C₂₀-alkyl radical; more preferably U is an ethyl, a n-propyl, an iso-propyl, a n-butyl, an iso-butyl, a tert-butyl, a hexyl or an octyl radical. Examples of this reaction can be found in US 4,399,054 and US 5,698,487.

Preferably the adduct of formula MgT₂·UOH_{g} is partially dealcoholated as described in US 5,698,487. Therefore a further object of the present invention is a supported catalyst system obtainable by the process comprising the following steps:
a) contacting
   (i) a partially dealcoholated adduct of formula MgT₂^{.}wUOH wherein T is chlorine, bromine, or iodine, preferably chlorine; U is a linear or branched C₁-C₁₀ alkyl radical, preferably U is a linear C₁-C₁₀ alkyl radical; more preferably U is a methyl or an ethyl radical; w ranges from 6 to 0.1, preferably from 3 to 0.5; more preferably from 2.9 to 0.5 being also a non integer number; with
   (ii) an organo-aluminium compound of formula HₑAlQ¹₃₋ₑ or HₑAl₂Q¹₆₋ₑ, where the Q¹ substituents, same or different, are hydrogen atoms, halogen atoms, or hydrocarbon radicals containing from 1 to 20 carbon atoms optionally containing silicon or germanium atoms; with the proviso that at least one Q¹ is different from halogen, and e ranges from 0 to 1, being also a non-integer number; preferably such hydrocarbon radicals are linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing silicon or germanium atoms; preferably Q¹ is a linear or branched C₁-C₂₀-alkyl radical; more preferably Q¹ is an ethyl, a n-propyl, an iso-propyl, a n-butyl, an iso-butyl, a tert-butyl, a hexyl or an octyl radical;
   to obtain an adduct of formula (I) MgT₂·yAlQⱼ(OU)₃₋ⱼ described above; and
b) contacting the product obtained from step a) with at least one one compound selected from the compounds of formula (II), (III) and (IV) as described above.

The partially dealcoholated adduct of formula MgT₂wUOH used in step a) can be obtained by partial dealcoholation of adducts of MgT₂ with alcohols, said adducts contains from 1 to 6 mol of alcohol. It is possible that two adducts having the same content of alcohol, i.e. having the same empirical formula, be different in porosity and surface area for the reason that one adduct is partially dealcoholated.

The dealcoholation can be carried out according to known methodologies such as those described in US 5,698,487. Depending on the extent of the dealcoholation treatment, partially dealcoholated adducts can be obtained having an alcohol content generally ranging from 0.1 to 3 moles of alcohol per mole of MgT₂, preferably from 2.9 to 0.5; more preferably from 2.9 to 1.

Said partially dehalcoholated magnesium adduct is then contacted with an organo-aluminium compound of formula HₑAlQ¹₃₋ₑ or HₑAl₂Q¹₆₋ₑ in an inert solvent with methods common known in the art, such as the method described in EP-A-553 806.

In step b) of the process of the present invention at least one compound of compound formula (II), (III), and (IV) can be supported on the carrier obtained in step a) according to known methods by bringing the product of step a) into contact, for example, with a solution of the said compound, operating at temperatures between room temperature and 120°C. The said compound that is not fixed on the support is removed by filtration or similar methods.

The amount of said compounds supported on the adduct of formula (I) is generally between 1000 µmol/g of support and 1 µmol/g of support; preferably said amount ranges from 500 µmol/g of support to 2 µmol/g of support; more preferably from 200 µmol/g of support to 2 µmol/g of support.

Preferably, the compound of formula (II) has formulas (IIa) or (IIb) 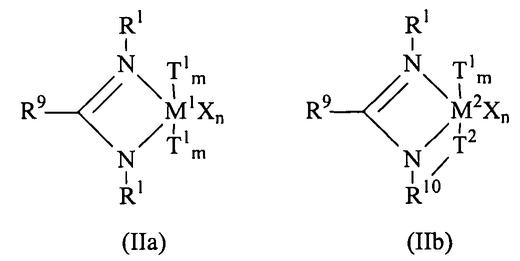 wherein R¹, T¹, M¹, X, m and n have been described above
R⁹ is hydrogen or a linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radical optionally containing heteroatoms belonging to groups 13-17 of the periodic table; preferably R⁹ is a C₆-C₂₀-aryl, C₇-C₂₀-alkylaryl or C₇-C₂₀-arylalkyl radical;
R¹⁰ is a divalent group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms; preferably R¹⁰ is a C₁-C₂₀ alkylidene radical; more preferably it is an ethylidene or a propylidene radical;
T² is an OR¹¹, SR¹¹ or a NR¹¹₂ radical, wherein R¹¹ is a linear or branched, cyclic or acyclic, C₁-C₁₀-alkyl, C₂-C1₀ alkenyl, C₂-C₁₀ alkynyl, C₆-C₁₀-aryl, C₇-C₁₀-alkylaryl or
C₇-C₁₀-arylalkyl radical;
preferably T¹ is tetrahydrofuran, a tertiary amine, pyridine or pyrrole;
preferably M¹ is titanium or vanadium
preferably n is 2 and preferably m is 1;
in a further embodiment, the compound of formula (II) has formula (IIc), 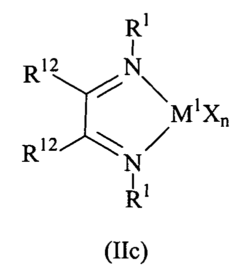 wherein R¹, T¹, M¹, X, and n have been described above;
R¹², equal to or different from each other, are hydrogen atoms or linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing heteroatoms belonging to groups 13-17 of the periodic table; two R¹² groups can also join to form a C₃-C₈membered ring that can bear C₁-C₁₅-alkyl, C₂-C₁₅ alkenyl, C₂-C₁₅ alkynyl, C₆-C₁₅-aryl, C₇-C₁₅-alkylaryl or C₇-C₁₅-arylalkyl substituents;
preferably R¹ is a C₆-C₂₀-aryl, C₇-C₂₀-alkylaryl or C₇-C₂₀-arylalkyl radical;
preferably M¹ is nickel and n is 2; X is preferably bromine;
Preferred compounds belonging to formula (IIc) are compounds of formula (IIca) and (IIcb) 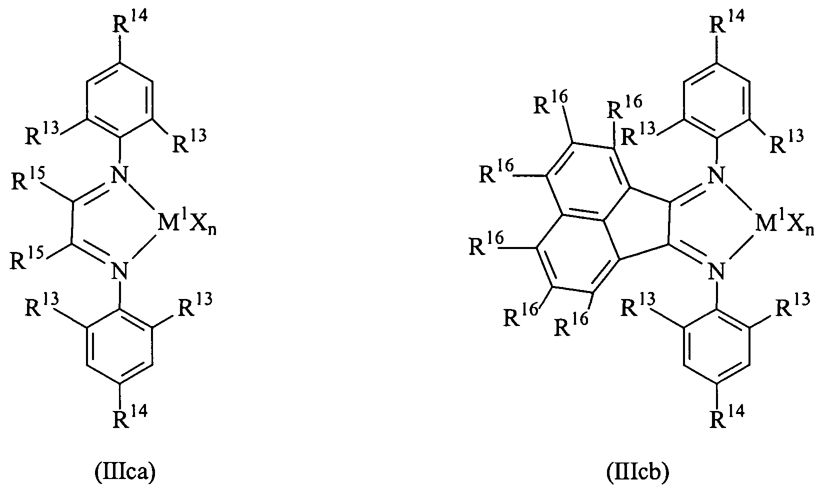 wherein:
R¹³, equal to or different from each other, are hydrogen atoms or linear or branched, cyclic or acyclic, C₁-C₁₀-alkyl radicals, such as methyl, ethyl and isopropyl radicals; preferably R¹³ is a C₁-C₁₀ alkyl radical;
R¹⁴, equal to or different from each other, are hydrogen atoms or linear or branched, cyclic or acyclic, C₁-C₁₀-alkyl radicals ; preferably they are hydrogen atoms or C₁-C₁₀ alkyl radical;
R¹⁵, equal to or different from each other, are hydrogen atoms linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing heteroatoms belonging to groups 13-17 of the periodic table; preferably R¹⁵, equal to or different from each other, are hydrogen atoms linear or branched, cyclic or acyclic, C₁-C₂₀-alkyl radicals;
R¹⁶, equal to or different from each other, are hydrogen atoms or C₁-C₁₅-alkyl, C₂-C₁₅ alkenyl, C₂-C₁₅ alkynyl, C₆-C₁₅-aryl, C₇-C₁₅-alkylaryl or C₇-C₁₅-arylalkyl radicals; preferably they are hydrogen atoms.

Compounds belonging to formulas (II), (III), and (IV) are well known in the art, they are described for example in, WO 96/23010, WO 97/02298, WO 98/40374, US 5707913 and *Organometallics* **2000**, *19,* 388.

The catalyst system object of the present invention can be used for (co)polymerizing one or more olefins. Therefore a further object of the present invention is a process for (co)polymerizing olefins containing from 2 to 20 carbon atoms comprising contacting one or more of said olefins under polymerization conditions in the presence of the catalyst system described above. Preferably alpha-olefins containing from 2 to 20 carbon atoms are used.

Examples of alpha-olefins that can be used with the process of the present invention are: ethylene, propylene, 1-butene, 1-pentene, 4-methyl-1-pentene, 1-hexene, 1-octene, 4,6-dimethyl-1-heptene, 1-decene, 1-dodecene, 1-tetradecene, 1-hexadecene, 1-octadecene and 1-eicosene. Preferred olefins are propylene, ethylene 1-butene, 1-hexene and 1-octene.

The following examples are given for illustrative purpose and do not intend to limit the invention.

### Materials and general procedures

All manipulations were performed under an argon atmosphere using glove box (Braun MB-150 GI or LM-130) and Schlenk techniques. Solvents were distilled from Na (toluene) or Na/benzophenone (heptane) and freeze-thaw degassed twice before use.

The vanadium aminidinate complexes **1** and **2** were prepared according to *Eur. J. Inorg. Chem.* **1998,** 1867. The analogous titanium amidinate complexes **3** and **4** were prepared as follows:
[{PhC(NSiMe₃)₂}TiCl₂(THF)₂] (**3**) was prepared by adding [PhC(NSiMe₃)₂]Li(THF) (1.1 g, 4.07 mmol) to a suspension of TiCl₃(THF)₃ (1.50 g, 4.05 mmol) in THF *(ca.* 100 mL) cooled to -78 °C, The mixture was allowed to warm to room temperature while stirring, affording a dark green-brown solution. After stirring overnight, the volatiles were removed *in vacuo* and the residue was "stripped" twice (2 x 10 mL) with petroleum ether (40-70 distillates). The residue was then extracted with hot toluene *(ca.* 40 mL) and cooled to - 30 °C, yielding 3 as dark-green needles (0.77 g, 37 %).
[(Me₃SiNC(Ph)NCH₂CH₂NMe₂)TiCl₂(THF)] (**4**) was prepared by adding
[(Me₃SiNC(Ph)NCH₂CH₂NMe₂)Li] (1.0 g, 3.69 mmol) to a suspension of TiCl₃(THF)₃ (1.37 g, 3.70 mmol) in THF (*ca.* 100 mL) cooled to -78 °C. Further steps were as described for (3), yielding 4 as brown-green needles (0.54, 32 %).

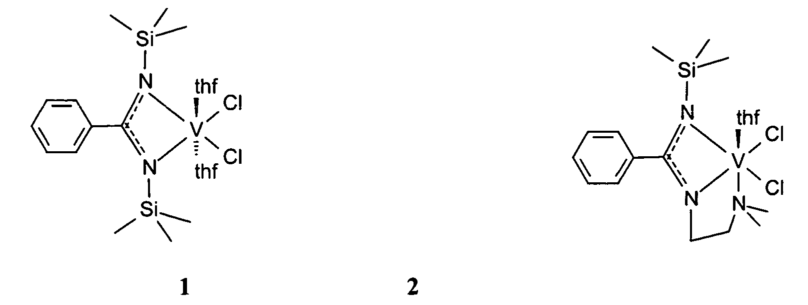

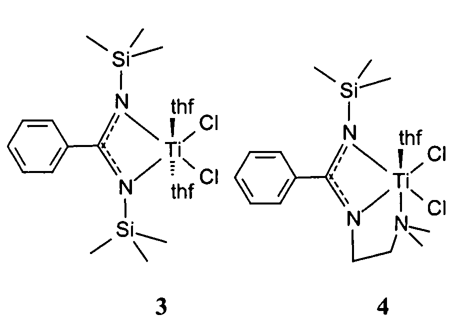

The chromium complex **5** [η¹:η⁵-Me₂NCH₂CH₂C₅Me₄)CrCl₂] was prepared according to A. Döring, J. Göhre, P.W. Jolly, B. Kryger, J. Rust, G.P.J. Verhovnik, *Organometallics* **2000,** *19*, 388.

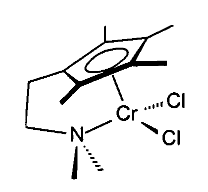

The nickel complexes **6 - 9** (R=isopropyl) were prepared according to procedures reported in: L.J. Johnson, C.M. Killian, M. Brookhart, *J. Amer. Chem. Soc.* **1995,** *117*, 6414, and R.J. Maldanis, J.S. Wood, A. Chandrasekaran, M.D. Rausch, J.C.W. Chien, *J*. *Organometal. Chem.* **2002**, *645*, 158.

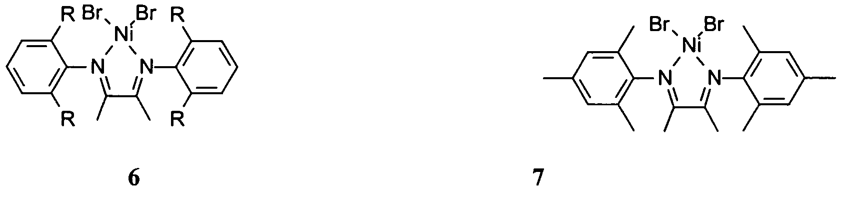

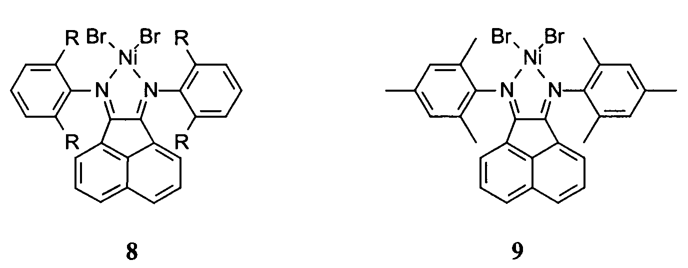

AlMe₃ (2M in hexane), AlEt₃ (25 wt.-% solution in toluene) and Al^{*n*}Oct₃ (25 wt-%, ca. 0.5M in hexanes) were obtained from Aldrich. Al^{*i*}Bu₃ (1M solution in hexane) was purchased from Fluka.

Ethylene (3.5 grade supplied by Air Liquide) was purified by passing over columns of 4Å Molecular Sieves and BTS copper catalyst.

The Al and transition metal contents were determined by ICP / atomic absorption.

Surface area (BET) is determined according to BET methods (apparatus used: SORPTOMATIC 1800 from Carlo Erba).

The ethoxide content in the magnesium adducts was determined by GC analysis of the ethanol content of a solution obtained by dissolving 100 mg support in 5 mL *n*-BuOH containing a known quantity of n-PrOH as internal standard.

### Preparation of partially dealcoholated adduct of formula MgCl₂^{·}wUOH

The adduct MgCl₂^{·}3EtOH was prepared according to the procedure described in Example 2 of Patent U.S. Pat. No. 4,399,054, operating at 3000 rpm instead of at 10000 rpm.

The adduct was partially dealcoholated by heating in a stream of nitrogen at temperatures increasing from 30°C. to 180°C.

### Preparation of the support MgCl₂/AlQⱼ(OEt)₃₋ⱼ

Typically, 10-50 mL *n*-heptane were added to 1-5 g of a spherical adduct of magnesium chloride and ethanol under argon and the mixture was cooled to 0 °C. A 25-28 wt-% solution of AlR₃ was then added gradually, over 5-10 min., to give a mol ratio AlR₃/EtOH = 2, the reaction being carried out in a standard Schlenk vessel equipped with a pressure release valve. The mixture was allowed to warm slowly to room temperature and reaction was continued with occasional agitation for a further 1 day (AlMe₃), 2 days (AlEt₃), 3 days (Al^{*i*}Bu₃) or 4 days (Al^{*n*}Oct₃). The solid support was isolated by filtration, washed with heptane and petroleum ether (40-70) and then dried under a flow of argon and subsequently in vacuum. The compounds so obtained are reported in table 1.

### Preparation of the catalyst system - general procedure

A solution containing 1 *µ*mol of the relevant transition metal complex (reported in table 2) in toluene (1 mL) was added to 100 mg of support prepared as described above. The mixture was heated to 50 °C and kept at this temperature for 4 h. The toluene was then removed by decantation and the solid was reslurried in petroleum ether.

### Polymerization - general procedure

Ethylene polymerization was carried out in a 1 L Premex autoclave equipped with a vortex stirrer. Petroleum ether (40-70, 450 mL) was introduced via a canulla. The reactor contents were stirred and heated to 50 °C. Triisobutylaluminium (TIBAL, 1 mmol) in petroleum ether (40-70, 10 mL) was introduced via the catalyst injection system. An ethylene overpressure of 5 bar was applied and stirring continued for 5-10 min. A slurry of the immobilized catalyst (100 mg) in petroleum ether (40-70, 10 mL) was introduced through the catalyst injection system, which was then flushed with a further 50 mL petroleum ether (40-70). The ethylene pressure was increased to 10 bar and kept constant for 2 h at a polymerization temperature of 50 °C, the stirrer speed being ca. 1000 rpm. After venting the reactor, the polymer slurry was mixed with 20 mL of acidified methanol, 50 mL demineralised water and 10 mL HCl (10 %). The polymer was recovered by filtration, washed with water (3 x 200 mL) and ethanol (2 x 30 mL) and dried in vacuo overnight at 70 °C. The polymerization results are reported in table 2.

**Table 1.**

| Composition of MgCl₂/AlRₙ(OEt)₃₋ₙ supports | | | | |
|---|---|---|---|---|
| Reactants | Product | | | Overall Composition |
| Starting material | Al alkyl | Al, wt-% | OEt, wt.-% | |
| MgCl₂.1.1 EtOH | AlMe₃ | 5.16 | 6.2 | MgCl₂.0.22AlMe_{2.28}(Oet)_{0.72} |
| MgCl₂.1.1 EtOH | AlEt₃ | 3.33 | 4.6 | MgCl₂.0.14AlEt_{2.17}(OEt)_{0.83} |
| MgCl₂.1.1 EtOH | Al^{*i*}Bu₃ | 3.00 | 3.3 | MgCl₂.0.13A1ⁱBu_{2.33}(Oet)_{0.67} |
| MgCl₂.1.1 EtOH | Al^{*n*}Oct₃ | 1.96 | 0.9 | MgCl₂.0.09AlⁿOct_{2.72}(OEt)_{0.28} |
| | | | | |
| MgCl₂.2.1 EtOH | AlMe₃ | 8.06 | 9.4 | MgCl₂.0.39AlMe_{2.30}(OEt)_{0.70} |
| MgCl₂.2.1 EtOH | AlEt₃ | 5.21 | 6.1 | MgCl₂.0.24AlEt_{2.30}(OEt)_{0.70} |
| MgCl₂.2.1 EtOH | Al^{*i*}Bu₃ | 3.32 | 3.9 | MgCl₂.0.15AⁱBu_{2.30}(Oet)_{0.70} |
| MgCl₂.2.1 EtOH | Al^{*n*}Oct₃ | 2.61 | 1.3 | MgCl₂.0.13AlⁿOct_{2.70}(OEt)_{0.30} |

**Table 2**

| run | complex | magnesium adduct | activity kg/mol. bar.h | Mw | Mw/Mn |
|---|---|---|---|---|---|
| 1 | 1 | MgCl₂.0.24AlEt_{2.30}(OEt)_{0.70} | 3120 | 762000. | 2.0 |
| 2 | 2 | MgCl₂.0.24AlEt_{2.30}(OEt)_{0.70} | 1490 | 747000 | 2.0 |
| 3 | 3 | MgCl₂.0.24AlEt_{2.30}(OEt)_{0.70} | 2250 | 602000 | 2.3 |
| 4 | 4 | MgCl₂.0.24AlEt_{2.30}(OEt)_{0.70} | 1920 | 611000 | 2.3 |
| 5 | 5 | MgCl₂.0.22AlMe_{2.28}(OEt)_{0.72} | 1910 | 1396000 | 1.8 |
| 6 | 5 | MgCl₂.0.14AlEt_{2.17}(OEt)_{0.83} | 2690 | 1560000 | 1.9 |
| 7 | 5 | MgCl₂.0.13AlⁱBu_{2.33}(OEt)_{0.67} | 1970 | 1318000 | 1.8 |
| 8 | 5 | MgCl₂.0.09AlⁿOct_{2.72}(OEt)_{0.28} | 1880 | 1451000 | 1.8 |
| 9 | 5 | MgCl₂.0.39AlMe_{2.30}(OEt)_{0.70} | 1780 | n.a. | n.a. |
| 10 | 5 | MgCl₂.0.24AlEt_{2.30}(OEt)_{0.70} | 2530 | n.a. | n.a. |
| 11 | 5 | MgCl₂.0.15AlⁱBu_{2.30}(OEt)_{0.70} | 1960 | n.a. | n.a. |
| 12 | 5 | MgCl₂.0.13AlⁿOct_{2.70}(OEt)_{0.30} | 1170 | n.a. | n.a. |
| 13 | 6 | MgCl₂.0.24AlEt_{2.30}(OEt)_{0.70} | 1190 | 1300000 | 2.3 |
| 14 | 6 | MgCl₂.0.24AlEt_{2.30}(OEt)_{0.70} | 1162 | n.a. | n.a. |
| 15 | 7 | MgCl₂.0.24AlEt_{2.30}(OEt)_{0.70} | 4224 | 300000. | 2.7 |
| 16 | 8 | MgCl₂.0.24AlEt_{2.30}(OEt)_{0.70} | 1242 | n.a | n.a. |
| 17 | 8 | MgCl₂.0.24AlEt_{2.30}(OEt)_{0.70} | 1270 | 510000 | 2.1 |
| 18 | 9 | MgCl₂.0.24AlEt_{2.30}(OEt)_{0.70} | 7158 | 290000 | 2.9 |
| 19* | 9 | MgCl₂.0.24AlEt_{2.30}(OEt)_{0.70} | 11416 | n.a. | n.a. |

| | | | | | |
|---|---|---|---|---|---|
| *=(30 min. polymerization) n.a.= not available | | | | | |

## Claims

1. A supported catalyst system comprising the product obtainable by contacting:
a) an adduct of formula (I)
MgT₂^{·}yAlQⱼ(OU)₃₋ⱼ (I)
wherein
Mg is magnesium;
T is chlorine, bromine, or iodine;
U is a linear or branched C₁-C₁₀ alkyl radical,
y ranges from 6.00 to 0.05;
j ranges from 3 to 0.1, being also a non integer number;
Q substituents, same or different, are hydrocarbon radicals containing from 1 to 20 carbon atoms optionally containing silicon or germanium atoms;
b) with at least one compound selected from the compounds of formula (II), (III) and (IV) 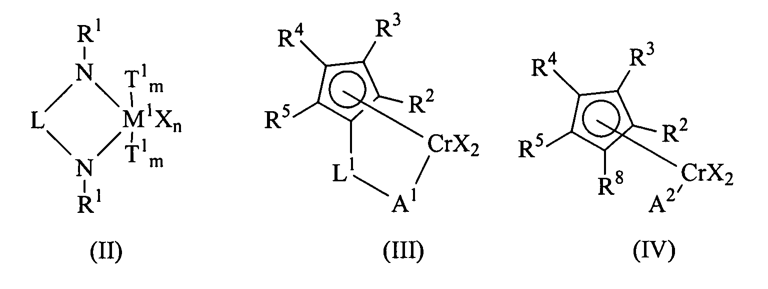
wherein
in the compound of formula (II)
M¹ is a transition metal atom selected from Groups 3-11 of Periodical Table (Group 3 including lanthanoids);
the substituents X, equal to or different from each other, are monoanionic sigma ligands selected from the group consisting of hydrogen, halogen, R, OR, OCOR,
SR, NR₂ and PR₂, wherein R is a hydrocarbon radical containing from 1 to 20 carbon atoms optionally containing one or more Si or Ge atoms;
n ranges from 0 to 3;
the bonds connecting the two nitrogen atoms with the bridge L can be single bonds or double bonds.
R¹, equal to or different from each other, are C₁-C₄₀ hydrocarbon radicals optionally containing one or more heteroatoms belonging to groups 13-17 of the Periodic Table of the Elements;
L is a divalent bridge connecting the two nitrogen atoms;
m ranges from 0 to 1; when m is 0 the group T¹ does not exist;
T¹ is a Lewis base; the group T¹ can also be bonded to the group R¹;
in the compound of formula (III)
Cr is a chromium atom; X has been described above;
R², R³, R⁴ and R⁵, equal to or different from each other, are hydrogen atoms, halogen atoms, or C₁-C₄₀ hydrocarbon radicals optionally containing one or more heteroatoms belonging to groups 13-17 of the Periodic Table of the Elements; or two adjacent R², R³, R⁴ and R⁵ form one or more C₃-C₇ membered ring optional containing heteroatoms belonging to groups 13-17 of the periodic table;
L¹ is a divalent bridging group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms such as SiMe₂, SiPh₂;
m1 is 1 or 2, and more specifically it is 1 when Z is N or P, and it is 2 when Z is C, Si or Ge;
n1 is an integer ranging from 1 to 4;
A¹ is a moiety of formula (V) 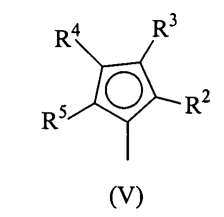 wherein R², R³, R⁴ and R⁵ have been described above; otherwise A¹ is an oxigen atom, a sulphur atom, a NR⁷, NR⁷₂, a OR⁷ or a SR⁷ group, wherein R⁷, is a C₁-C₄₀ hydrocarbon radical, preferably R⁷ is a linear or branched, cyclic or acyclic, C₁-C₂₀-alkyl, C₆-C₂₀-aryl, C₇-C₂₀-alkylaryl or C₇-C₂₀-arylalkyl radical;
in the compound of formula (IV)
Cr is chromium; X, R², R³, R⁴ and R⁵ have been described above, and R⁸ has the same meaning given for R², R³, R⁴ and R⁵;
A² is halogen, R⁷, OR⁷, OCOR⁷, SR⁷, NR⁷₂, NR⁷₃, SR⁷₂, OR⁷₂ wherein R⁷ has been described above.

2. The catalyst system according to claim 1 wherein T is chlorine; U is a linear C₁-C₁₀ alkyl radical; Y ranges from 2 to 0.1; and Q is a linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing silicon or germanium atoms.

3. The catalyst system according to claims 1 or 2 wherein in the compound of formula (II) M¹ is a transition metal atom selected from Groups 3-6 and 8-10, X is an halogen atom or a R group; and L is a divalent C₁-C₄₀ hydrocarbon group optionally containing one or more heteroatoms belonging to groups 13-17 of the Periodic Table of the Elements.

4. The catalyst system according to any one of claims 1 to 3 wherein in the compound of formula (III) L¹ is a divalent group (ZR⁶ₘ₁)ₙ₁; Z being C, Si, Ge, N or P, and the R⁶ groups, equal to or different from each other, being hydrogen or hydrocarbon groups containing from 1 to 20 carbon atoms, or two R⁶ can form a aliphatic or aromatic C₄-C₇ ring; R⁷ is a C₁-C₂₀-alkyl radical; and A¹ is a NR⁷₂ group.

5. The catalyst system according to any one of claims 1 to 4 wherein the adduct of formula (I)
MgT₂^{·}yAlQⱼ(OU)₃₋ⱼ (I)
has a surface area (BET) higher than 30 m²/g.

6. The catalyst system according to any one of claims 1 to 5 obtainable by the process comprising the following steps:
a) contacting
(i) a partially dealcoholated adduct of formula MgT₂^{.}wUOH wherein T is chlorine, bromine, or iodine; U is a linear or branched C₁-C₁₀ alkyl radical, w ranges from 6 to 0.1; with
(ii) an organo-aluminium compound of formula HₑAlQ¹₃₋ₑ or HₑAl₂Q¹₆₋ₑ, where the Q¹ substituents, same or different, are hydrogen atoms, halogen atoms, or hydrocarbon radicals containing from 1 to 20 carbon atoms optionally containing silicon or germanium atoms; with the proviso that at least one Q¹ is different from halogen, and e ranges from 0 to 1, being also a non-integer number;
to obtain an adduct of formula (1) MgT₂·yAlQⱼ(OU)₃₋ⱼ (I) described above; and
b) contacting the product obtained from step a) with at least one one compound selected from the compounds of formula (II), (III) and (IV) as described in claim 1.

7. The catalyst system according to anyone of claims 1 to 6 wherein the amount of the cpmpounds of formula (II), (III) or (IV) supported on the adduct of formula (I) is generally between 1000 *µ*mol/g of support and 1 *µ*mol/g of support.

8. The catalyst system according to anyone of claims 1 to 7 wherein the compound of formula (II) has formulas (IIa) or (IIb): 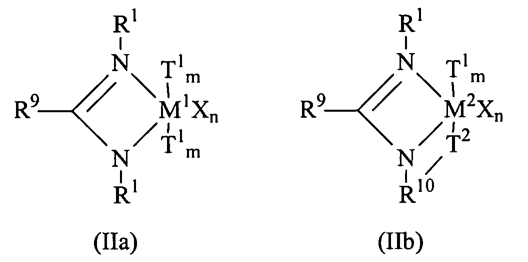 wherein R¹, T¹, M¹, X, m and n have been described in claim 1;
R⁹ is hydrogen or a linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radical optionally containing heteroatoms belonging to groups 13-17 of the periodic table;
R¹⁰ is a divalent group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms;
T² is an OR¹¹, SR¹¹ or a NR¹¹₂ radical, wherein R¹¹ is a linear or branched, cyclic or acyclic, C₁-C₁₀-alkyl, C₂-C1₀ alkenyl, C₂-C₁₀ alkynyl, C₆-C₁₀-aryl, C₇-C₁₀-alkylaryl or C₇-C₁₀-arylalkyl radical.

9. The catalyst system according to claim 8 wherein in the compounds of formula (IIa) and (IIb) preferably T¹ is tetrahydrofuran or a tertiary amine; M¹ is titanium or vanadium; n is 2 and m is 1.

10. The catalyst system according to anyone of claims 1 to 7 wherein the compound of formula (II) has formula (IIc): 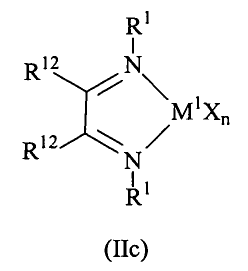 wherein R¹, T¹, M¹, X, and n have been described in claim 1;
R¹², equal to or different from each other, are hydrogen atoms or linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing heteroatoms belonging to groups 13-17 of the periodic table; two R¹² groups can also join to form a C₃-C₈membered ring that can bear C₁-C₁₅-alkyl, C₂-C₁₅ alkenyl, C₂-C₁₅ alkynyl, C₆-C₁₅-aryl, C₇-C₁₅-alkylaryl or C₇-C₁₅-arylalkyl substituents.

11. The catalyst system according to claim 10 wherein the compound of formula (IIc) has formulas (IIca) or (IIcb): 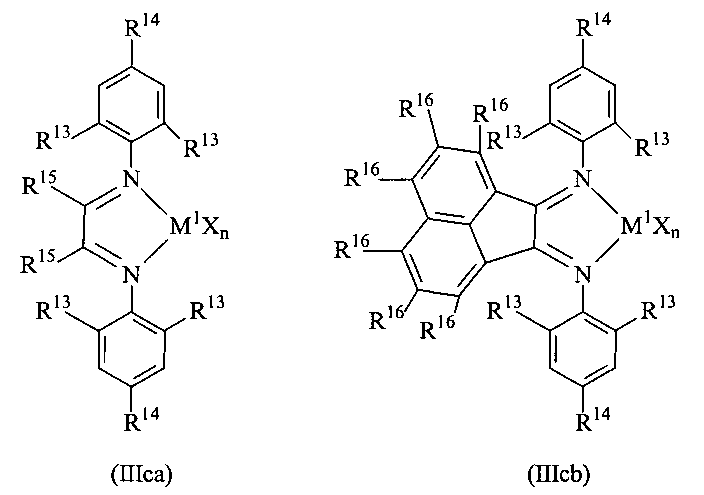 wherein:
R¹³, equal to or different from each other, are hydrogen atoms or linear or branched, cyclic or acyclic, C₁-C₁₀-alkyl radicals;
R¹⁴, equal to or different from each other, are hydrogen atoms or linear or branched, cyclic or acyclic, C₁-C₁₀-alkyl radicals;
R¹⁵, equal to or different from each other, are hydrogen atoms linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals optionally containing heteroatoms belonging to groups 13-17 of the periodic table;
R¹⁶, equal to or different from each other, are hydrogen atoms or C₁-C₁₅-alkyl, C₂-C₁₅ alkenyl, C₂-C₁₅ alkynyl, C₆-C₁₅-aryl, C₇-C₁₅-alkylaryl or C₇-C₁₅-arylalkyl radicals.

12. A process for (co)polymerizing olefins containing from 2 to 20 carbon atoms comprising contacting one or more of said olefins under polymerization conditions in the presence of the catalyst system of claims 1-11.

13. The process according to claim 12 wherein one or more alpha-olefins are (co)polymerized.

14. The process according to claim 9 wherein said alpha olefins are propylene, ethylene, 1-butene, 1-hexene and 1-octene.
